# EUROPÄISCHE PATENTSCHRIFT

(11) **EP 0 545 003 B1**
(45) Veröffentlichungstag und Bekanntmachung des Hinweises auf die Patenterteilung: **13.03.1996**
(21) Anmeldenummer: 92114568.6
(22) Anmeldetag: 27.08.1992
(51) Int. Cl.: H02K 5/24, H02K 5/00, F04D 29/66, F16F 1/36, H02K 5/15

(54) **Halterung für einen Elektromotor**
Support for an electric motor
Support pour un moteur électrique

(30) Priorität: 06.11.1991 DE 4136485
(43) Veröffentlichungstag der Anmeldung: 09.06.1993
(73) Patentinhaber: Behr GmbH & Co., D-70469 Stuttgart (DE)
(72) Erfinder: Arleth, Michael, Dipl.-Ing., W-7143 Vaihingen / Enz (DE); Fischinger, Claus-Dieter, W-7260 Calw-Heumaden (DE); Zeller, Thomas, Dipl.-Ing., W-7000 Stuttgart 50 (DE)
(74) Vertreter: Wilhelm & Dauster Patentanwälte European Patent Attorneys

(56) Entgegenhaltungen:
- DE-A- 605 203
- FR-A- 1 059 009
- FR-A- 1 255 721
- FR-A- 1 521 494
- GB-A- 452 858
- GB-A- 609 426
- GB-A- 736 733
- US-A- 2 074 092
- PATENT ABSTRACTS OF JAPAN vol. 16, no. 23 (E-1157) 21. Oktober 1992 & JP-A-32 039 139 (HITACHI) 24. Oktober 1991
- PATENT ABSTRACTS OF JAPAN vol. 16, no. 23 (E-1157) 21. Oktober 1992 & JP-A-32 039 139

## Beschreibung

Die Erfindung betrifft eine Halterung für einen Elektromotor, entsprechend dem Oberbegriff von Anspruch 1 und Anspruch 8.

Bei Elektromotoren treten Magnet- und Kommutierungsgeräusche auf, die von der Halterung über Körperschall übertragen und unter Umständen noch verstärkt werden.

Es ist bekannt (FR-A 15 21 494), einen Elektromotor für ein Gebläserad einer Heizungs- oder Klimaanlage mittels leistenförmiger Stützelemente aus gummielastischem Material in einem ihn umgebenden Halter zu halten. Die Abstützelemente, die sich in Richtung einer Mantellinie des Polrings erstrecken, weisen einen im wesentlichen rechteckigen Querschnitt auf. Sie greifen jeweils in Längsnuten des Polrings ein. Wenigstens eines der Abstützelemente greift darüber hinaus noch in eine Längsnut des Halters ein.

Es ist auch bekannt (FR-A 12 55 721), zwischen einem Halter und einem Gehäuse eines Elektromotors ein oder zwei geschlossene Ringe aus gummielastischem Material vorzusehen, die jeweils mit in axialer Richtung verlaufenden Rippen oder Stegen oder mittels anderer Körper an dem anderen Bauteil abgestützt sind.

Die bekannten Abstützelemente können nur dann zu einer wirksamen Geräuschdämpfung führen, wenn die Außenabmessungen des Polrings oder des Motorgehäuses exakt dimensioniert sind. Wenn bezüglich des Durchmessers größere Toleranzen auftreten, wie dies bei den heute als Serien-Produkte hergestellten Elektromotoren üblich ist, bei welchen die Toleranzen in der Größenordnung von 1,5 mm liegen können, so ergeben sich sehr unterschiedliche Verformungen der Abstützelemente und dadurch unterschiedliche Abstützkräfte, so daß eine Dämpfungswirkung nicht gewährleistet ist.

Der Erfindung liegt die Aufgabe zugrunde, die Übertragung der Magnet- und Kommutierungsgeräusche wesentlich zu reduzieren und dabei die Durchmessertoleranzen in dem Polring zu berücksichtigen.

Diese Aufgabe wird durch die Merkmale des Patentanspruches 1 und durch die Merkmale des Patentanspruches 8 gelöst.

Durch das gummielastische Material wird eine wirksame Entkopplung und damit eine Verminderung der Übertragung von Körperschall erreicht. Da die Federkonstante der Abstützelemente über einen vorgegebenen Deformationsweg annähernd konstant ist, der den zu berücksichtigenden Durchmesserunterschieden im Polring angepaßt ist, wird sichergestellt, daß unabhängig von dem jeweils vorhandenen Durchmesser des Polrings bei allen Elektromotoren eine gleichermaßen wirksame Entkopplung erhalten wird. Ebenso werden im wesentlichen die gleichen radialen Abstützkräfte für die Elektromotoren sichergestellt.

Weitere Ausgestaltungen der Erfindung sind in den abhängigen Ansprüchen angegeben.

Weitere Merkmale und Vorteile der Erfindung ergeben sich aus der nachfolgenden Beschreibung der in der Zeichnung dargestellten Ausführungsformen.
- Fig. 1: zeigt in schematischer Darstellung einen axialen Schnitt durch eine Halterung für einen zwei Gebläseräder antreibenden Elektromotor (Schnitt entlang der Linie I-I der Fig. 2),
- Fig. 2: eine Ansicht auf die Halterung und den Elektromotor in Richtung des Pfeiles II der Fig. 1 in größerem Maßstab,
- Fig. 3: eine Stirnansicht einer Abstützung in nochmals größerem Maßstab,
- Fig. 4: eine schematische Darstellung eines Axialschnittes einer weiteren Ausführungsform einer erfindungsgemäßen Halterung für einen ein Gebläserad antreibenden Elektromotor,
- Fig. 5: eine Stirnansicht auf eine der Abstützungen der Halterung nach Fig. 4,
- Fig. 6: einen Axialschnitt durch eine weitere Ausführungsform mit knopfartigen Abstützelementen,
- Fig. 7: eine Stirnansicht der Halterung nach Fig. 6 und
- Fig. 8 und 9: Schnitte durch die elastischen Abstützelemente der Fig. 6 in größerem Maßstab.

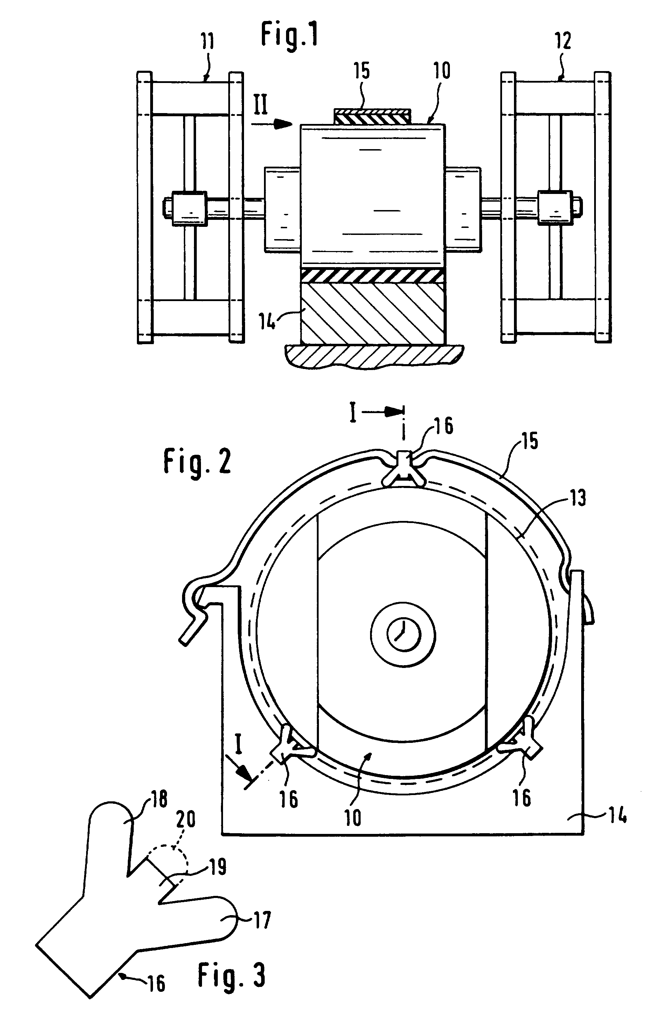

Bei der Ausführungsform nach Fig. 1 ist ein Elektromotor (10) an beiden Enden seiner Welle mit Gebläserädern (11, 12) versehen, so daß insgesamt ein vierflutiges Gebläse gebildet werden kann. Der Polring (13) des Elektromotors (10) wird mittels einer Halterung gehalten, die aus einem Lagerkörper (14) mit einer etwa halbzylindrischen Aussparung und einem Federbügel (15) gebildet wird.

Wie in Fig. 2 angedeutet ist, können die Durchmesser der Polringe (13) der Elektromotoren (10) in einem gewissen Bereich in der Größenordnung von 1,5 mm schwanken. Dieser Bereich ist mit einer ausgezogenen und einer gestrichelten Linie dargestellt. Um diese Durchmesserdifferenzen einerseits auszugleichen und um andererseits eine Entkopplung zwischen der Halterung und dem Motor zu erhalten, sind sowohl zwischen dem Haltekörper (14) als auch zwischen dem Federbügel (15) und dem Polring (13) des Elektromotors (10) Abstützungen (16) aus gummielastischem Material vorgesehen. Diese Abstützungen (16) sind Profile, die sich in Längsrichtung einer Mantellinie des Polrings erstrecken. In dem Abstützkörper (14) sind zwei derartiger Abstützungen (16) angeordnet, während der Federbügel (15) eine Abstützung (16) aufnimmt, so daß insgesamt eine Drei-Punkt-Aufnahme erhalten wird. Die Abstützungen (16) besitzen zwei V-förmig zueinander geneigte Rippen (17, 18), die einen Winkel von etwa 60 % miteinander einschließen und die jeweils gegenüber einer Radialen zu dem Polring (13) geneigt sind. Zwischen diesen V-förmig angeordneten Rippen (17, 18) befindet sich eine weitere, im wesentlichen radial zu dem Polring gerichtete Rippe (19), die kürzer als die beiden anderen Rippen (17, 18) ist. Diese kürzere, mittlere Rippe (19) dient als eine Art Begrenzungsanschlag, durch welchen die Maximalbewegung des gesamten Elektromotors und damit auch der beiden Gebläseräder (11, 12) beschränkt wird. Auf der den Rippen (17, 18, 19) gegenüberliegenden Seite besitzen die Abstützelemente (16) eine Profilierung, mit der sie in entsprechende Aufnahmen des Stützkörpers (14) und des Federbügels (15) eingesetzt werden können. Der Abstützkörper (14) kann aus Kunststoff oder Metall, beispielsweise Aluminiumdruckguß o.dgl. hergestellt sein.

Um den Elektromotor (10) auch in seiner Axialrichtung in der Halterung festzulegen, ist wenigstens eine der Abstützung (16) im Bereich der mittleren Rippe (19) mit wenigstens einem knopfartigen Ansatz (20) versehen (Fig. 3), der in eine entsprechende Aussparung des Polrings (13) des Elektromotors einrastbar ist. Damit ist der Elektromotor auch in axialer Richtung gesichert, wobei diese Sicherung ebenfalls über die gummielastische Kopplung erfolgt.

Mittels der Abstützungen (16) wird sichergestellt, daß Polringe (13) mit dem größten und dem kleinsten Durchmesser mit im wesentlichen gleichen Kräften aufgenommen und gehalten werden, wobei die Rippen (17, 18) sich in dem Bereich der möglichen Durchmessertoleranzen so verformen, daß eine annähernd konstante Federkennlinie erhalten wird. Damit wird sichergestellt, daß nicht nur die gleichen Abstützkräfte für alle Polringe (13) gegeben sind, sondern auch die gleichen Verhältnisse bezüglich der Entkopplung.

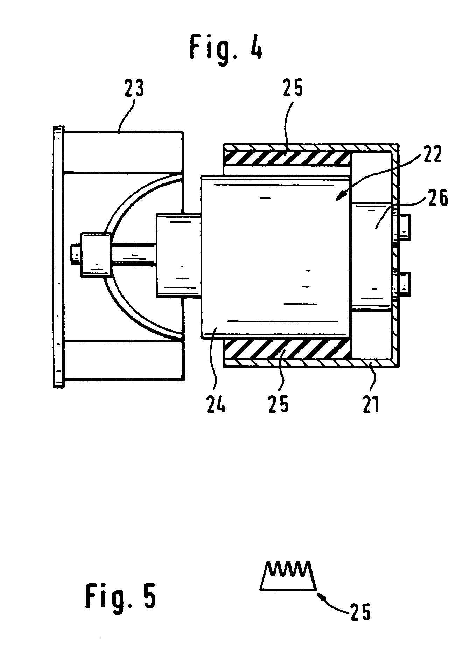

Bei der Ausführungsform nach Fig. 4 ist ein Elektromotor (22) vorgesehen, der nur einseitig mit einem Gebläserad (23) versehen ist. Dieser Elektromotor (22) ist mit seinem Polring (24) in einem Halter (21) gehalten, der mehrere fingerartige Ansätze aufweist, die den Polring (24) umgreifen. Zwischen diesen Ansätzen des Halters (21) und dem Polring sind Abstützungen (25) aus gummielastischem Material angeordnet, die aus einer Vielzahl von schneidenartigen Rippen gebildet werden, deren Schneiden zu dem Polring (22) gerichtet sind. Diese schneidenartigen und damit relativ dünnen Rippen stellen sicher, daß auch hier bei den möglichen Durchmessertoleranzen der Polringe (24) der einzelnen Elektromotoren (22) die Verformung dieser Rippen so erfolgt, daß im wesentlichen gleiche Abstützkräfte und damit im wesentlichen auch gleiche Entkopplungswirkungen erhalten werden.

Bei der Bauart nach Fig. 4 erfolgt die Axialsicherung des Elektromotors (22) mittels Schrauben, die von dem Halter (21) axial in einen Bügel (26) des Elektromotors eingeschraubt sind. Um eine sichere und vollständige Entkopplung zu erhalten, werden die Schrauben in Büchsen geführt, die über gummielastisches Material in dem Halter (21) gehalten sind.

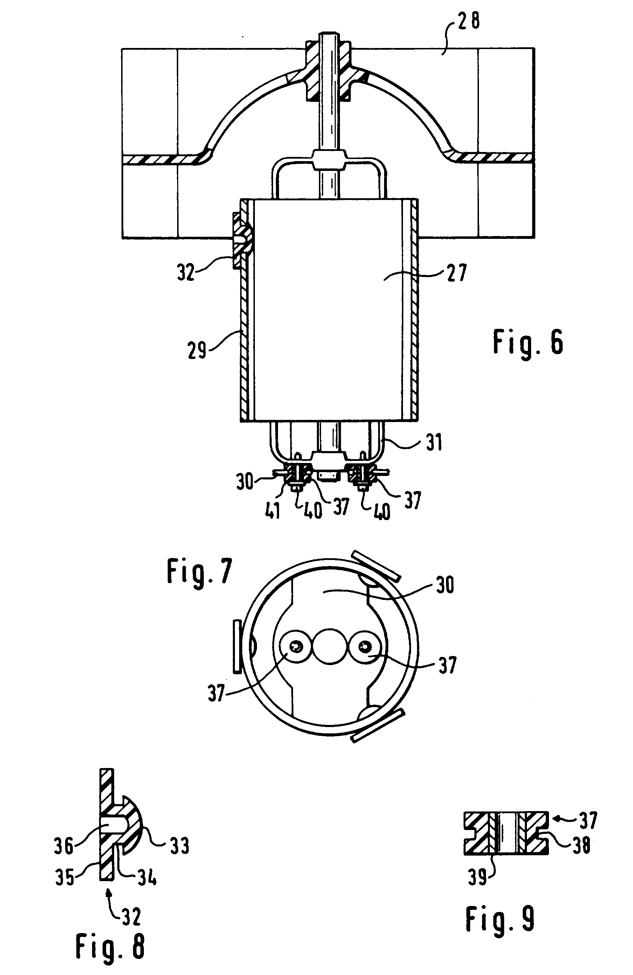

Bei der Ausführungsform nach Fig. 6 bis 9 ist der Polring (27) eines ein Gebläserad (28) antreibenden Elektromotors innerhalb eines rohrförmigen Halters (29) gehalten. Der rohrförmige Halter (29), der sich über die gesamte axiale Länge des ebenfalls rohrförmigen Polringes (27) erstreckt, ist an seinem dem Gebläserad (28) gegenüberliegenden Ende mit einem Bügel (30) versehen, an welchem ein Lagerbügel (31) des Elektromotors befestigt ist.

Im Bereich des dem Gebläserad (28) zugewandten Endes ist der rohrförmige Kalter mit 3 knopfartigen, in einer Reihe in Winkelabständen von 120° verteilten, gummielastischen Abstützelementen (32) abgestützt. Die knopfartigen Abstützelemente (32), die in Fig. 8 noch einmal dargestellt sind, sind von außen in entsprechende Aussparungen des rohrförmigen Halters eingesteckt. Sie besitzen einen nach innen in den Kalter ragenden, linsenförmigen Kopf (33), der über einen Hals an einen außen auf dem Halter (29) zu liegen kommenden scheibenförmigen Flansch angeschlossen sind. Sie sind mit einem nach außen offenen, sich durch den Hals (34) bis zu dem Kopf (33) erstreckenden zylindrischen Hohlraum (36) versehen. Aufgrund dieses Hohlraumes (36) sind die knopfförmigen Abstützelemente beim Einsetzen in die Aussparungen des Halters (39) relativ stark verformbar, ohne daß eine Beschädigung zu befürchten ist. Darüber hinaus bietet der Hohlraum (36) die Gewähr, daß bei einem Deformationsweg in der Größenordnung der zulässigen Toleranzen des Polringes eine im wesentlichen konstante Federkennlinie gegeben ist, so daß in allen Anwendungsfällen gleichmäßige Abstützkräfte und gleichmäßiges Dämpfungsverhalten gewährleistet ist. Der Kopf (33) schließt über eine relative breite Schulter an den Hals an, durch welche sichergestellt wird, daß die größtmöglichen auf sie von dem Polring (27) in radialer Richtung aufgebrachten Kräfte nicht dazu führen, daß diese Abstützelemente (32) aus dem Halter (29) nach außen herausgedrückt werden. Dabei werden die Preßkräfte berücksichtigt, die der Polring bei größtzulässiger Unrundheit ausübt. Zusätzlich werden Fliehkräfte berücksichtigt, die bei Kurvenfahrten eines Fahrzeuges, das mit einem derartigen Gebläse und einer Halterung ausgerüstet ist, auf die Abstützelemente (32) einwirken können.

Die axiale Halterung zwischen dem Elektromotor und dem Halter (29) ist ebenfalls entkoppelt, d.h. die Verbindung zwischen dem Lagerbügel (31) und dem Bügel (30) des Halters (29). In Aussparungen des Bügels (30) sind Hülsen (37) aus gummielastischem Material eingesteckt, die in Fig. 9 in größerem Maßstab dargestellt sind. Diese Hülsen (37), die eine axiale Länge von wenigstens dem Dreifachen der Dicke des Materials des Bügels (30) aufweisen, sind außen mit einer Ringnut (38) versehen, deren Nutengrund dem Innendurchmesser der Aussparungen angepaßt ist. Nach dem Aufklipsen dieser Hülsen (37) aus gummielastischem Material auf den Bügel (30), wird in die Hülsen (37) eine Büchse (39) aus Messing oder Stahl eingesteckt, die als Abstandshülse dient. Durch diese Hülsen werden Schrauben (40) hindurchgesteckt, die in entsprechende Gewinde des Lagerbügels (31) eingeschraubt werden. Zwischen den Köpfen der Schrauben (40) und den gummielastischen Hülsen (37) sind Unterlagsscheiben (41) angeordnet. Die metallischen Hülsen (39), die als Abstandshülsen dienen, stellen sicher, daß die Schrauben (40) nicht so fest angezogen werden können, daß die Hülsen (37) derart zusammengedrückt würden, daß ihre Entkopplungswirkung nicht mehr erhalten wird.

Die Ausführungsform nach Fig. 6 bis 9 ist besonders einfach, da die Abstützelemente (32) sowie die Hülsen (37) einfach herzustellen und vor allem auch einfach zu montieren sind. Denoch wird eine sehr gute Entkopplungswirkung erhalten und so die Übertragung von Körperschall wesentlich reduziert.

Bei allen Ausführungsformen ist selbstverständlich vorgesehen, daß die Rippen (17, 18) der Abstützungen (16) sowie die schneidenartigen Rippen der Abstützungen (25) und die knopfförmigen Abstützelemente (32) so bemessen sind, daß sie bereits von dem Polring (13, 24, 27) des jeweils kleinsten Durchmessers verformt werden, d.h. daß die von ihnen gebildete Aufnahme in unbelastetem Zustand kleiner als der kleinste Polring (13, 24 27) ist.

## Patentansprüche

1. Halterung für einen Elektromotor (10, 22), insbesondere für einen Antriebsmotor für ein oder zwei Gebläseräder (11, 12; 23) einer Heizungs- oder Klimaanlage eines Kraftfahrzeuges, mit mehreren über den Umfang verteilten Abstützungen (16, 25) für einen Polring (13, 24) des Elektromotors, wobei die Abstützungen aus gummielastischem Material bestehen und in Richtung einer Mantellinie des Polrings verlaufen, dadurch gekennzeichnet, daß die Abstützungen (16, 25) derart profiliert sind, daß sie über einen vorgegebenen Deformationsweg eine annähernd konstante Federkennlinie aufweisen, wozu die Abstützungen (16, 25) wenigstens zwei gegensinnig geneigte, etwa V-förmig angeordnete Rippen (17, 18) aufweisen.

2. Halterung nach Anspruch 1, dadurch gekennzeichnet, daß die Höhe der Rippen (17, 18) größer als ihre Breite ist.

3. Halterung nach Anspruch 1 oder 2, dadurch gekennzeichnet, daß die Rippen 817, 18) gegenüber der radialen Richtung geneigt angeordnet ist.

4. Halterung nach einem der Ansprüche 1 bis 3, dadurch gekennzeichnet, daß zwischen den beiden geneigten Rippen (17, 18) eine radial ausgerichtete, als ein Radialbewegungen des Elektromotors (10) begrenzender Anschlag dienende kürzere Rippe (19) angeordnet ist.

5. Halterung nach einem der Ansprüche 1 bis 4, dadurch gekennzeichnet, daß die Abstützungen (25) mehrere schneidenartige, parallel zueinander verlaufende Rippen aufweisen.

6. Halterung nach einem der Ansprüche 1 bis 4, dadurch gekennzeichnet, daß wenigstens eine der Abstützungen (16) mit wenigstens einem knopfartigen, in eine Aussparung des Polrings (13) einrastbaren Vorsprung (20) versehen ist.

7. Halterung nach Anspruch 5, dadurch gekennzeichnet, daß die Abstützungen (25) an einen Grundkörper aus Kunststoff angespritzt sind.

8. Halterung für einen Elektromotor, insbesondere für einen Antriebsmotor für ein oder zwei Gebläseräder einer Heizungs- oder Klimaanlage eines Kraftfahrfzeuges, mit mehreren über den Umfang verteilten Abstützungen (32) aus gummielastischem Material für einen Polring (27) des Elektromotors, dadurch gekennzeichnet, daß der Polring (27) mittels knopfförmiger Abstützelemente (32) in radialer Richtung abgestützt ist, die derart profiliert sind, daß sie über einen vorgegebenen Deformationsweg eine annähernd konstante Federkennlinie aufweisen und die in Aussparungen einer Wand eines Halters (29) eingesetzt sind und einen auf der dem Polring abgewandten Seite offenen Hohlraum (36) aufweisen.

9. Halterung nach Anspruch 8, dadurch gekennzeichnet, daß die Abstützelemente (32) in einer Reihe gleichmäßig über den Umfang verteilt angeordnet sind.

10. Halterung nach Anspruch 8 oder 9, dadurch gekennzeichnet, daß die Abstützelemente (32) einen linsenförmigen, zum Polring (27) hin gewölbten Kopf (33) aufweisen.

11. Halterung nach einem der Ansprüche 1 bis 10, dadurch gekennzeichnet, daß ein Lagerbügel (31) des Elektromotors in axialer Richtung unter Zwischenschaltung gummielastischer Elemente (37) an dem Halter (29, 30) befestigt ist.

12. Halterung nach Anspruch 11, dadurch gekennzeichnet, daß der Halter (29) mit einem Bügel (30) versehen ist, der zwei Aussparungen aufweist, in die beidseits überstehende, gummielastische Hülsen (37) eingesetzt sind, in die jeweils eine metallische Büchse (39) eingesteckt ist, in der Befestigungsschrauben (40) geführt sind, die den Lagerbügel (31) des Elektromotors an dem Bügel (30) des Halters (29) halten.

## Claims

1. A holding device for an electric motor (10, 22), in particular for a drive motor for one or two impellers (11, 12; 23) in a heating or air conditioning system for a vehicle, with several supports (16, 25) spaced around its outside for a pole ring (13, 24) in the electric motor, whereby the supports are made of an elastic rubber material and run in the direction of the outer surface of the pole ring, characterised in that the supports (16, 25) are shaped in such a way that with a given path of deformation they have an approximately constant spring characteristic, to which end the supports (15, 25) have at least two ribs (17, 18) which are angled away from each other to form an approximate V-shape.

2. A holding device in accordance with claim 1, characterised in that the height of the ribs (17, 18) is greater than their breadth.

3. A holding device in accordance with claim 1 or 2, characterised in that the ribs (17, 18) are positioned against the radial direction.

4. A holding device in accordance with one of claims 1 to 3, characterised in that between the two angled ribs (17, 18) is positioned a radially angled, shorter rib (19) which acts as stop to limit the radial movement of the electric motor (10).

5. A holding device in accordance with one of claims 1 to 4, characterised in that the supports (25) feature several cutter-like ribs which run parallel to one another.

6. A holding device in accordance with one of claims 1 to 4, characterised in that at least one of the supports (16) is provided with at least one button-shaped projection (20) which engages in a groove in the pole ring (13).

7. A holding device in accordance with claim 5, characterised in that the supports (25) are moulded onto a basic body made of plastic.

8. A holding device for an electric motor, in particular for a drive motor for one or two impellers in a heating or air conditioning system for a vehicle, with several supports (32) spaced around its outer edge made out of an elastic rubber material for a pole ring (27) on the electric motor, characterised in that the pole ring (27) is supported radially by means of button-shaped support elements (32) which are shaped in such a way that with a given deformation path they have an approximately constant spring characteristic and are placed in grooves in one wall of a holding device (29) and have an open cavity (36) on the side facing the pole ring.

9. A holding device in accordance with claim 8, characterised in that the support elements (32) are spaced evenly around the edge in a row.

10. A holding device in accordance with claims 8 or 9, characterised in that the support elements (32) have lens-shaped heads (33) which are curved towards the pole ring (27).

11. A holding device in accordance with one of claims 1 to 10, characterised in that a bearing bracket (31) on the electric motor is fixed radially to the holding device (29, 30) by means of the connection of two elastic rubber elements (37).

12. A holding device in accordance with claim 11, characterised in that the holding device (29) is provided with a bracket (30) which has two grooves into which are inserted elastic rubber sleeves (37) which overlap at both ends, into which a metal bush (39) is in turn inserted, into which the fixing screws (40) which hold the bearing bracket (31) on the electric motor to the bracket (30) on the holding device (29) are screwed.

## Revendications

1. Fixation de moteur électrique (10,22), en particulier d'un moteur de commande d'une ou de deux roues (11, 12; 23) de ventilateur d'une installation de chauffage ou de climatisation d'un véhicule automobile, comprenant plusieurs soutiens (16, 25) répartis à la circonférence et destinés à un anneau polaire (13, 24) du moteur électrique, les soutiens étant en matière ayant l'élasticité du caoutchouc et étant orientés dans la direction d'une génératrice de l'anneau polaire, caractérisée en ce que les soutiens (16, 25) sont profilés de manière qu'ils aient une caractéristique d'élasticité sensiblement constante sur une course prescrite de déformation, les soutiens (16, 25) présentant à cette fin au moins deux ailettes (17, 18) disposées sensiblement en V et inclinées en sens opposés.

2. Fixation selon la revendication 1, caractérisée en ce que la hauteur des ailettes (17, 18) est supérieure à leur largeur.

3. Fixation selon la revendication 1 ou 2, caractérisée en ce que les ailettes (17, 18) sont inclinées par rapport à la direction radiale.

4. Fixation selon l'une des revendications 1 à 3, caractérisée en ce qu'une ailette plus courte (19) orientée radialement, servant de butée de limitation des mouvements radiaux du moteur électrique (10), est disposée entre les deux ailettes inclinées (17, 18).

5. Fixation selon l'une des revendications 1 à 4, caractérisée en ce que les soutiens (25) comprennent plusieurs ailettes parallèles en forme de lames.

6. Fixation selon l'une des revendications 1 à 4, caractérisée en ce qu'au moins l'un des soutiens (16) est muni d'au moins une saillie (20) en forme de bouton qui est destinée à s'enclencher dans un évidement de l'anneau polaire (13).

7. Fixation selon la revendication 5, caractérisée en ce que les soutiens (25) sont venus d'injection avec un corps de base en matière plastique.

8. Fixation de moteur électrique, en particulier d'un moteur de commande d'une ou de deux roues de ventilateur d'une installation de chauffage ou de climatisation d'un véhicule automobile, comprenant plusieurs soutiens (32) répartis à la circonférence, en matière ayant l'élasticité du caoutchouc et destinés à un anneau polaire (27) du moteur électrique, caractérisée en ce que l'anneau polaire (27) est soutenu en direction radiale par des éléments de soutien en forme de boutons (32) qui sont profilés de manière qu'ils aient une caractéristique d'élasticité sensiblement constante sur une course prescrite de déformation, qui sont installés dans des évidements d'une cloison d'un support (29) et qui présentent une cavité (36) qui est ouverte sur le côté tourné à l'opposé de l'anneau polaire.

9. Fixation selon la revendication 8, caractérisée en ce que les éléments de soutien (32) sont disposés en étant répartis régulièrement en une rangée à la circonférence.

10. Fixation selon la revendication 8 ou 9, caractérisée en ce que les éléments de soutien (32) comportent un bouton en forme de lentille (33) qui est bombé vers l'anneau polaire (27).

11. Fixation selon l'une des revendications 1 à 10, caractérisée en ce qu'un étrier (31) de montage du moteur électrique est fixé en direction axiale sur le support (29, 30) avec interposition d'éléments (37) ayant l'élasticité du caoutchouc.

12. Fixation selon la revendication 11, caractérisée en ce que le support (29) est muni d'un étrier (30) qui comporte deux évidements dans lesquels sont enfilées des douilles (37) qui débordent des deux côtés, qui ont l'élasticité du caoutchouc et dans chacune desquelles est enfilé un manchon métallique (39) dans lequel passent des vis de fixation (40) qui fixent l'étrier (31) de montage du moteur électrique à l'étrier (30) du support (29).
